# EUROPEAN PATENT SPECIFICATION

(11) **EP 3 250 091 B1**
(45) Date of publication and mention of the grant of the patent: **27.05.2020**
(21) Application number: 16701051.1
(22) Date of filing: 20.01.2016
(51) Int. Cl.: A47J 31/40, A47J 31/44

(54) **SYSTEM FOR REFILLING BEVERAGE DISPENSER WITH POWDER**
SYSTEM ZUM NACHFÜLLEN EINES GETRÄNKESPENDERS MIT PULVER
SYSTÈME DE RECHARGE DE DISTRIBUTEUR DE BOISSON AVEC DE LA POUDRE

(30) Priority: 29.01.2015 EP 15153051
(43) Date of publication of application: 06.12.2017
(73) Proprietor: Société des Produits Nestlé S.A., 1800 Vevey (CH)
(72) Inventor: DUBIEF, Flavien, 1424 Champagne (CH); SCORRANO, Lucio, 1400 Yverdon-les-Bains (CH); BAUDET, Larry, 1473 Font (CH); JAMOLLI, Kevin, 1183 Bursins (CH); CHEVALLEY, Samuel, 1400 Yverdon-les-Bains (CH)
(74) Representative: Ducreux, Marie
(86) International application number: PCT/EP2016/051121
(87) International publication number: WO 2016/120138

(56) References cited:
- WO-A2-2009/000887
- WO-A2-2011/036063
- WO-A2-2011/036063
- JP-A- 2010 254 321
- US-A1- 2013 032 611

## Description

### Field of the invention

The present invention relates to beverage dispensers preparing beverages from a soluble powder stored in a tank and from which a dose of powder is dispensed to prepare a beverage.

### Background of the invention

Many beverages like espresso and other coffee beverages, milk beverages, chocolate beverages are prepared by mixing a soluble food or beverage powder with a diluent in a mixing device. The mixing device can comprise a dissolution chamber in which the soluble component and the diluent are fed. The diluent can be introduced into the dissolution chamber in order to create a whirlpool to efficiently dissolve the soluble powder in the hot water or the hot diluent can be introduced under the form of jets that provides mixing, dissolving and frothing. The mixture can also eventually be frothed by a whipper in the dissolution chamber to reconstitute the beverage and produce foam. The beverage is then usually evacuated into a receptacle for drinking. These devices can also mix the beverage soluble powder with the diluent in a drinking cup, usually a single use cup. In that case the soluble food component is introduced in the cup and the diluent is introduced under the form of jets that provides mixing, dissolving and/or frothing.
Whatever the way the powder and the diluent are mixed together the beverage soluble powder is usually stored in a tank placed above the dissolution chamber opened mouth and a dosing device like a screw or an auger doses and delivers the beverage soluble powder which falls in the dissolution chamber or the drinking cup. Diluent is simultaneously fed to the dissolution chamber so that dissolution occurs.
The tank storing the food or beverage powder comprises a storing chamber with a removable lid at the top. The tank can be refilled with powder by removing the lid and replenishing the storing chamber. This operation is usually implemented by means of simple powder refilling container of food of beverage powder. The top of the powder refilling container is cut or torn and the powder is emptied in the tank storing chamber.
This current practice present several disadvantages.

First the refilling can be very messy because powder can flow around the tank during the operation of transfer. If the operator manipulating the powder refilling container is clumsy, the place inside or around the machine can very rapidly becomes messy and dirty with the difficulty to efficiently removes powder and makes the place proper.

Secondly beverage dispensers often comprise several food or beverage tanks comprising different powders for preparing different beverages. For example, beverage dispensers often comprise an instant coffee powder tank and a milk powder tank. It is important to refill the tanks with always the same powder for different reasons. One reason is that no powder must be contaminated by other types of powders in order to not affect the final taste of the beverage ordered by the customer.
Another reason is that usually each tank is associated to a specific dosing device and the dosing device associated to one tank is set for dosing a particular amount of a particular powder in order to provide the expected dissolution with the diluent. Erroneously refilling a tank with a wrong powder leads to an incorrect preparation of the beverage by the dispenser.

WO 2011/036063 describes the combination of a powder container holding assembly and a machine receiving assembly of a beverage dispenser. The receiving assembly comprises guiding means and locking means to position and lock the powder container holding assembly in the dispenser to enable powder refill. The machine receiving assembly is designed to position the discharge outlet of the powder container in two positions, and in both positions the discharge outlet is oriented downwardly.

There is a need for improving the refilling of powder tanks within a beverage dispenser.

An object of the present invention is to provide a system of a tank for storing powder in a beverage dispenser and a powder refilling container for refilling said tank.

It would be advantageous to provide a system that limits the spilling of powder during refilling.

It would be advantageous to provide a system that avoids the risk of erroneous refilling of powder tanks.

It would be advantageous to provide an ergonomic system to refill powder tanks.

### Summary of the invention

In a first aspect of the invention, there is provided a system of a tank for storing a food or beverage powder and a powder refilling container for refilling said tank with powder, in which
- the tank comprises a storing chamber and a powder inlet,
- the powder refilling container comprises a powder outlet,
the powder outlet of the powder refilling container and the powder inlet of the tank being designed for cooperating together in order to create a connection and a path for powder between the powder outlet of the powder refilling container and the powder inlet of the tank, and
wherein the connection between the powder outlet of the powder refilling container and the powder inlet of the tank is designed so that, once the powder inlet and the powder outlet are connected, the connection enables the positioning of the powder outlet of the powder refilling container:
- in one first position wherein the powder outlet of the powder refilling container is oriented upwardly, and
- in one second position wherein the powder outlet of the powder refilling container is oriented downwardly.

Generally the tank for storing the food or beverage powder is a tank that is part of a beverage dispenser. It is generally non disposable. Depending on the configuration of the dispenser, it can be removed from the dispenser, for example for maintenance or cleaning, and eventually for refilling.
The tank comprises a powder outlet, generally positioned at the bottom of the storing chamber of the tank.
Preferably the tank is a storing and dosing tank. Then it comprises a dosing device, generally positioned at the bottom of the storing chamber of the tank and delivering dose of powder through the powder outlet of the tank. The dosing device can be a rotatable volumetric dosing device like an endless screw or, alternatively, a helicoidal spring, also known as spring auger.
The tank with a dosing device is usually configured for enabling the connection of the dosing device with a motorized shaft at the rear end of the tank, said shaft being part of the beverage dispenser.
According to another embodiment the dosing device is not part of the tank. In that embodiment the dosing device can be part of the beverage dispenser and the tank is a simple storing tank that comprises a powder outlet for dispensing powder to a dosing device within a beverage dispenser. In this embodiment, preferably, the powder outlet comprises a device enabling the opening of the outlet of the tank during dosing operation.
Generally the storing chamber of the tank presents globally the shape of a parallelepiped. It usually presents two lateral walls and two end walls, usually one rear end wall and one front end wall. The walls extend between the bottom and the top of the storing chamber and are essentially vertical. By essentially vertical it is meant that some parts of the walls can be inclined, generally to create a funnel above the bottom of the tank. For example, when the tank comprises an endless dosing screw at its bottom, the inclination of the walls increases the storing volume of the storing chamber above the screw and creates a funnel that guides powder to the screw.
The top of the tank is closed by a lid. The lid can be a removable lid in order to be able to clean the tank or for maintenance of the dosing device for example.

Generally the powder refilling container for refilling the tank with powder is a disposable powder refilling container. It is preferably a pouch, usually made of flexible film sheets.

The powder outlet of the powder refilling container and the powder inlet of the tank are designed for cooperating together in order to create a connection and a closed path for powder between the powder outlet of the powder refilling container and the powder inlet of the tank. The connection usually enables either the powder inlet of the powder refilling container to fit in the powder inlet of the tank or vice versa. Preferably the powder inlet of the powder refilling container fits inside the powder inlet of the tank.

The connection between the powder outlet of the powder refilling container and the powder inlet of the tank is designed so that it enables the positioning of the powder outlet of the powder refilling container relatively to the powder inlet of the tank in at least two positions :
- one first position, in which the powder outlet of the powder refilling container and the powder inlet of the tank cooperate and are connected but do not create a path for powder between the powder outlet of the powder refilling container and the powder inlet of the tank, and
- one second position, in which the powder outlet of the powder refilling container and the powder inlet of the tank cooperate and are connected and there is path for powder between them.
In the first position the powder outlet of the powder refilling container is oriented upwardly and the powder is not able to flow from the refilling container to the tank.
In the second position the powder outlet of the powder refilling container is oriented downwardly. Generally the flow path created in this second position is essentially straight. Accordingly the flow of powder is not hindered.
Preferably the flow path is essentially downwardly orientated from the powder outlet of the powder refilling container to the powder inlet of the tank. In the second position the flow path can present an angle of at most 60° with vertical, preferably at most 45°. The value of the angle can depend on the nature of the powder and its flowability.

Accordingly in the first position, the connection is created but there is no path for powder, that is to say the powder is not able to flow through the connection because, due to the upwardly orientation of the powder outlet, the powder stays in the container by gravity. This position enables the operator to correctly connect the powder outlet of the powder refilling container with the powder inlet of the tank without any risk that powder may fall around because there is no path for powder and powder is not induced to flow through the powder outlet.

And accordingly, once the powder outlet of the tank is positioned in the second position, a closed flow path is created for powder that is powder can flow from the powder refilling container to the tank by gravity.

Preferably the powder inlet is fixed and the powder outlet of the powder is able to move inside the fixed powder inlet between the two positions.

Preferably the connection between the powder outlet of the powder refilling container and the powder inlet of the tank is designed so that:
- the powder outlet of the powder refilling container is able to be connected to the powder inlet of the tank if said powder outlet is oriented upwardly only,
- once connected to the powder inlet of the tank, the powder outlet of the powder refilling container is able to move relatively to the powder inlet of the tank to be oriented downwardly.

Accordingly the operator is induced to hold the powder outlet of the powder refilling container upwardly oriented when he/she connects said powder outlet to the powder inlet of the tank, and powder is prevented from falling from said powder outlet during the connecting operation.

Preferably the powder outlet of the powder refilling container is an essentially straight tube. Optionally the tube can be slightly angled at one end, preferably at the first end configured for being attached to the powder refilling container. Generally the presence and the angle of the bend in the tube can depend on the shape of the powder refilling container.

The powder outlet of the powder refilling container can comprise a removable cover. According to one mode, the removable cover can be configured to be completely detached from the powder refilling container, for example like a screwed cap. The operator can manually completely remove the cap before the refilling operation.
According to another mode the powder outlet of the powder refilling container can comprise a removable cover, said cover being permanently attached to the powder refilling container, and the connection between the powder outlet of the powder refilling container and the powder inlet of the tank can be designed so that:
- in the first position, the cover closes the powder outlet,
- in the second position, the cover is removed from the powder outlet of the powder refilling container.

According to this last mode, the cover decreases the risk of powder falling from the powder refilling container during handling since the cover is removed only once the powder outlet is positioned within the powder inlet of the tank.

Generally the powder outlet of the powder refilling container moves from the first position to the second position according to a rotation. Preferably the powder outlet of the powder refilling container rotates inside the powder inlet of the tank.

According to one first mode the powder outlet of the powder refilling container is introduced in the powder inlet of the tank according to an upwardly translation up to the first position.

Accordingly the operator is induced to move the powder outlet upwardly during the step of connection of the powder outlet of the powder refilling container with the powder inlet of the tank, and for this reason, powder is prevented from falling from the powder outlet during this operation.

According to a less preferred second mode the powder outlet of the powder refilling container can be introduced in the powder inlet of the tank according to a downwardly translation down to the first position, the powder outlet of the pack being orientated upwards.

According to the invention the powder outlet of the powder refilling container comprises a tube and the powder inlet of the tank comprises an area for receiving said tube, the receiving area and the tube being designed so that the tube of the powder outlet of the powder refilling container slides in the receiving area of the powder inlet of the tank if the tube is orientated upwardly only.
The tube of the powder outlet of the powder refilling container can slide in the receiving area according to a downwardly or upwardly translation movement. Yet whatever the translation, the tube can slide in the receiving area if it is orientated upwardly only.
Preferably the receiving area is designed so that the tube is orientated upwardly with an angle of about 45° with vertical. Such an angle provides a good handling of the powder refilling container for the operator.
Accordingly at the end of the introduction of the tube of the powder outlet of the powder refilling container in the receiving area according to a downwardly or upwardly translation movement, the first position is reached, in which there is no path for powder between the powder outlet of the powder refilling container and the powder inlet of the tank because the powder outlet is oriented upwardly and powder cannot flow therefrom, and preferably the tube of the powder outlet of the powder refilling container is closed by a wall of the receiving area and optionally by the cover of the powder outlet.

Preferably the receiving area and the tube are designed so that, once the tube of the powder outlet of the powder refilling container is positioned in the receiving area of the powder inlet of the tank, the tube is able to be rotated in the receiving area so that the powder outlet of the powder refilling container is oriented downwardly in the powder inlet of the tank. Accordingly due to the rotation of the tube of the powder outlet of the powder refilling container in the receiving area, the second position is reached, in which there is a path for powder between the powder outlet of the powder refilling container and the powder inlet of the tank because the powder outlet is oriented downwardly inside the powder inlet of the tank and powder can flow therefrom.

The receiving area and the tube can present cooperating means for guiding the rotation movement of the tube in the receiving area. In a specific embodiment the receiving area and the tube can present corresponding guiding grooves and pins or bumps cooperating with these guiding grooves. The grooves can be on the internal surface of the receiving area and the pins or bumps can be on the external surface of the tube of the powder outlet or vice-versa.

Preferably the tube of the powder outlet of the powder refilling container presents two pins or bumps on each of its external lateral sides and the receiving area of the powder inlet of the tank presents two guiding grooves in its internal lateral sides configured for cooperating with at least one of the pins or bumps of the tube during the connection of the tube in the receiving area and during the movement between the first and the second positions.
One part of the guiding grooves can be straight in order to enable the introduction of the tube in the receiving area according to a downwardly or upwardly translation. Depending on the mode of introduction of the powder outlet in the powder inlet, another part of the guiding grooves in the receiving area can be curved in order to guide the rotation of the tube in the receiving area.

When the powder outlet comprises a removable cover permanently attached to the tube, the receiving area can comprise a retaining means for retaining the cover and uncovering the end of the powder outlet when the powder outlet is moved from the first position to the second position. The retaining means can be a lip.

Preferably the storing chamber comprises a removable cover for closing the powder inlet.

In a second aspect of the invention, there is provided a beverage dispenser comprising at least one tank for storing food or beverage powder, said tank being refillable by powder, wherein the tank comprises a storing chamber and a powder inlet and said powder inlet is designed for cooperating with the powder outlet of a powder refilling container in order to create a connection and a path for powder,
wherein the power inlet of the tank comprises a receiving area for connecting the powder outlet of the powder refilling container for refilling the tank, said receiving area being designed so that the powder outlet of the powder refilling container is able to be positioned relatively to the powder inlet of the tank in at least two positions :
- one first position in which the powder outlet of the powder refilling container is oriented upwardly,
- one second position in which the powder.

Preferably the receiving area is designed so that the powder outlet of a powder refilling container, preferably presenting the shape of a tube, can be received in the receiving area of the powder inlet of the tank if the powder outlet is oriented upwardly only.

Preferably the receiving area of the tank comprises means for enabling :
- the introduction of the powder outlet of the powder refilling container in the receiving area of the tank according to a translation up to the first position,
- the rotational movement of the powder outlet from the first to the second position.

Preferably the receiving area protrudes above the top of the storing chamber.

Preferably the receiving area is a socket, the internal walls of said socket comprising at least one guiding pin and/or groove for cooperation with at least one corresponding guiding groove and/or pin on the external wall of the powder outlet.
Preferably the receiving area comprises at least two pairs of symmetric guiding grooves on its internal walls.

Preferably the powder inlet of the tank is positioned at the front side of the dispenser.
The powder inlet of the tank can be positioned behind a front door.
The powder inlet of the tank can be positioned at the upper part of the front side of the dispenser.

Accordingly the operator can get access to the powder inlet of the tank by simply opening the front door of the dispenser or by simply opening a cover at the powder inlet of the tank to be refilled.

Generally the dispenser comprises at least two tanks storing different powders and the powder inlets of the tanks are designed differently for being connected to different corresponding powder refilling containers storing different powders.
Accordingly to the preferred embodiment the receiving areas of the different tanks can present different guiding grooves or guiding pins in order to be able to be connected to one corresponding powder refilling container powder outlet only

In a third aspect of the invention, there is provided a powder refilling container storing food or beverage powder comprising a powder outlet and said powder outlet being designed for cooperating with the powder inlet of a tank for storing powder of a beverage dispenser in order to create a connection and a path for powder, the power inlet of the tank comprising a receiving area for connecting the powder outlet of the powder refilling container, said receiving area being designed so that so that the powder outlet of the powder refilling container is able to be positioned relatively to the powder inlet of the tank in at least two positions :
- one first position, in which the powder outlet of the powder refilling container is oriented upwardly, and
- one second position in which the powder outlet of the powder refilling container is oriented downwardly.

Preferably the powder outlet comprises means for enabling :
- the introduction of the powder outlet of the powder refilling container in the receiving area of the tank according to a translation up to the first position,
- the rotational movement of the powder outlet from the first to the second position.

Preferably the external wall of the powder outlet comprises at least one guiding groove and/or pin designed for guiding the powder outlet in the powder inlet and for moving the powder outlet in the powder inlet from the first position to the second position.

Preferably the powder outlet of the powder refilling container is an essentially straight tube. Optionally the tube can be slightly angled at one end, preferably at the first end configured for being attached to the powder refilling container. Generally the presence and the angle of the bend in the tube can depend on the shape of the powder refilling container.

Generally the powder outlet is attached to a pouch, usually made of flexible film sheets, holding the powder.

In a fourth aspect of the invention, there is provided a range of powder refilling containers such as described above wherein said powder refilling containers differ by the nature of the powders they comprise and by the design of the powder outlets so that they can be connected to the powder inlet of dedicated powder tanks only.

In a fifth aspect of the invention, there is provided a method for refilling a tank for storing powder with a powder refilling container of a system such as described above wherein the following steps are implemented :
- the powder outlet of the powder refilling container is introduced in the powder inlet of the tank to the first position, the powder outlet of the powder refilling container being oriented upwardly, and then
- the powder outlet of the powder refilling container is moved to the second position in which the powder outlet of the powder refilling container is oriented downwardly.

Preferably the powder outlet of the powder refilling container is rotated between the first and the second positions.

Then for stopping the refilling of the tank, the following steps are implemented :
- the powder outlet of the powder refilling container positioned in the second position is oriented upwardly up to the first position, and
- the powder outlet of the powder refilling container is removed from the powder inlet of the tank.
Accordingly the removal corresponds to the inversed movements of the connection.

The method presents the advantage of enabling the operator to stop the filling of the tank properly even if powder remains in the powder refilling container. The operator is induced to orientate the powder outlet of the powder refilling container upwardly for removing the powder outlet from the powder inlet of the tank. Then the powder refilling container is in a position in which powder is prevented from falling around the tank. The risk is even weaker if the powder outlet comprises a removable cover.

In the present invention the term "powder" covers a bulk material like powder, free flowing particles, pellets, granulates, granules, grains (like coffee beans) or leaves (like tea leaves). Preferably, the food or beverage powder can be instant or roast and ground coffee, chocolate, instant tea, milk powder, soup or a coffee mix.

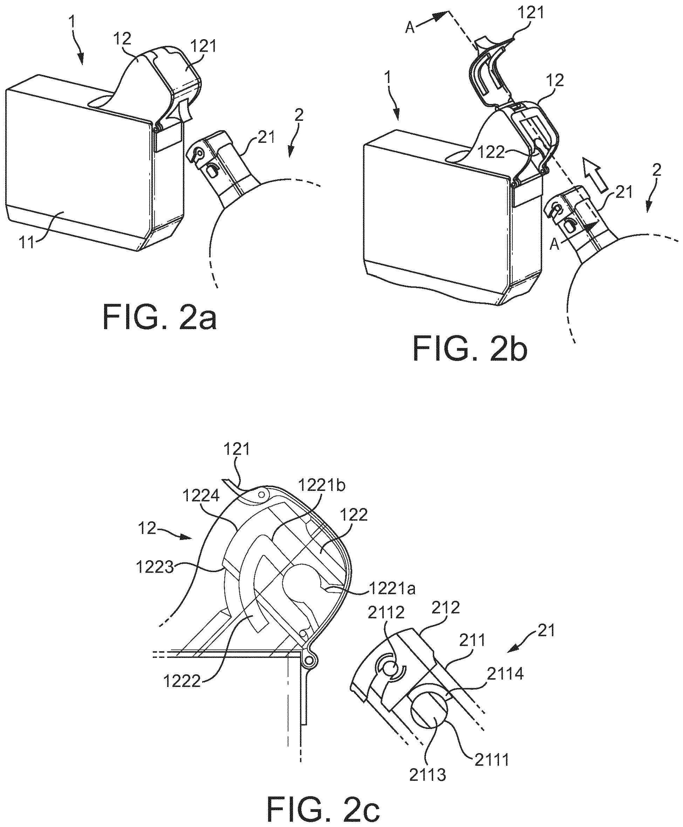

In the present application the terms "downwardly", "upwardly", "internal", "external", "rear", "front", "bottom", "top" and "lateral" are used to describe the relational positioning of features of the invention. These terms should be understood to refer to the tank in its normal orientation when positioned in a beverage preparation dispenser for the production of a beverage as shown in Figures 2a to 2c, 3, 4a to 4c, 5 and 6.
In the present application, the terms "the powder outlet of the powder refilling container is oriented upwardly" means that the external end of the powder outlet is oriented upwardly. Similarly, in the present application, the terms "the powder outlet of the powder refilling container is oriented downwardly" means that the external end of the powder outlet is oriented downwardly.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a schematic illustration of the principle of the invention,
- Figures 2a, 2b, 2c, 2d, 2e illustrate a system according to a first mode of the present invention,
- Figure 3 illustrates the cooperation between the tank and the powder refilling container of the system of the first mode,
- Figures 4a, 4b, 4c illustrate a system according to a second mode of the present invention,
- Figure 5 illustrates the cooperation between the tank and the powder refilling container of the system of the second mode,
- Figure 6 illustrates a beverage dispenser according to the present invention.

### Detailed description of the drawings

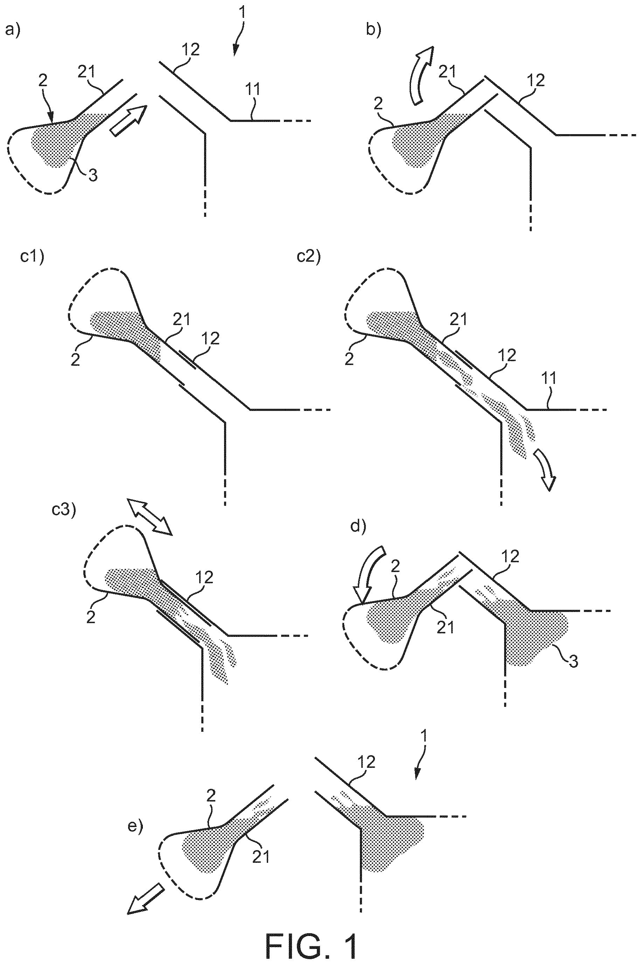

**Figure 1** illustrates schematically a system according to the present invention and the different steps for connecting the different parts of the system. The system comprises a tank 1 for storing a food or beverage powder and a powder refilling container 2 for refilling said tank with powder 3.

The tank 1 comprises a storing chamber 11 and a powder inlet 12 through which powder can be introduced for the refilling of the tank. Usually this tank 1 is a storing, and preferably dosing, tank of a beverage dispenser, also frequently called canister. Such a tank usually comprises a powder outlet positioned at the bottom of the storing chamber from which powder is dosed for preparing a beverage. Preferably the bottom of the storing chamber comprises a dosing device like a screw auger or a spring auger. Consequently, in this type of tank, powder is evacuated from the storing chamber through the bottom of the storing chamber and powder has to be refilled in the storing chamber regularly.
The powder refilling container 2 is conceived for storing a powder 3. It is usually a pouch. The powder refilling container comprises a powder outlet 21.
The powder outlet 21 of the powder refilling container and the powder inlet 12 of the tank are designed for cooperating together in order to transfer the powder of the powder refilling container to the storing chamber 11 and refill the tank. The cooperation consists in creating a connection and a path for powder between the powder outlet of the powder refilling container and the powder inlet of the tank.
As illustrated in steps a) and b) of Figure 1, when the powder outlet 21 of the powder refilling container is connected to the powder inlet 12 of the tank, the powder outlet is in a first position in which there is no path for powder. Indeed due to the introduction of the powder outlet 21 oriented upwardly, powder cannot flow through the powder outlet 21, moreover the end of the outlet is closed by an internal wall of the powder inlet 12 of the tank. In the first position illustrated in step b), there is no path for powder.
Once the powder outlet 21 is connected in the first position of step b), the powder outlet can be rotated so as to reach the position illustrated in step c1). In this position a path for powder is created and the end of the powder outlet 21 of the powder refilling container is oriented downwardly. As a result powder can flow due to gravity from the powder refilling container 2 to the storing chamber 11 of the tank as illustrated in step c2). Optionally the connection in this second position can enable a back and forth movement of the powder outlet 21 of the powder refilling container to accelerate and improve the filling of powder as illustrated in step c3).
To stop the refilling operation, the powder outlet 21 of the powder refilling container is rotated back in the first position as illustrated in step d). Powder present in the powder inlet 12 of the tank and in the powder outlet 21 of the powder refilling container flows respectively to the storing chamber 11 and the powder refilling container 2 due to the orientation of said elements. Simultaneously the path for powder is closed.
Finally the powder refilling container 2 can disconnected from the tank by pulling out the powder refilling container. The powder outlet 21 of the powder refilling container remains upwardly oriented during this step e) and powder is prevented from falling around the powder refilling container and the tank.

The powder outlet is generally a tube. The tube can present any sectional shape. Preferably the shape is conformal to the shape of the receiving area of the powder inlet of the tank.

**Figure 2a** illustrates a system of a tank 1 and a powder refilling container 2 according to a first embodiment of the present invention. The tank 1 comprises a storing chamber 11 and a powder inlet 12. The powder inlet 12 protrudes at the upper part of the storing chamber. Preferably the powder inlet is attached to the top of the storing chamber and is not removable therefrom (except for cleaning or maintenance). The powder inlet 12 comprises a removable cover 121 protecting the powder inlet 12 when the tank is not refilled. The powder refilling container 2 comprises a powder outlet 21.
**Figure 2b** illustrates the system wherein the cover 121 of the powder inlet of the tank has been removed to open the powder inlet 12. The powder inlet 12 comprises a receiving area 122 configured for receiving the powder outlet 21 of the powder refilling container. The receiving area 122 is designed so as to receive the powder outlet 21, said outlet being oriented upwardly. Figure 2b illustrates how the operator must position the powder refilling container to be able to introduce it inside the receiving area 122 of the powder inlet : as illustrated the powder refilling container must be hold so that the powder outlet of the powder refilling container is oriented upwardly and the powder refilling container is introduced according to an upwardly translation movement.

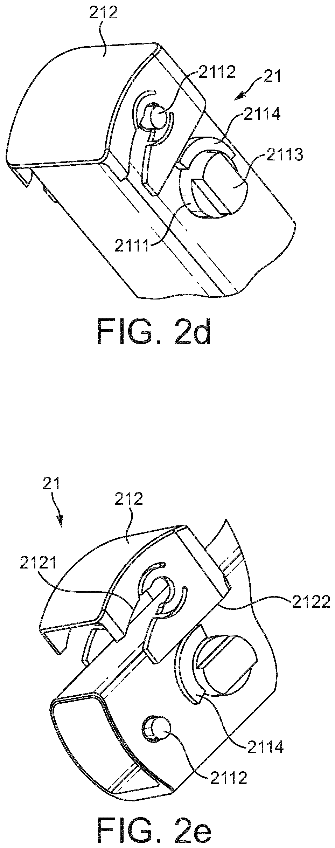

**Figure 2c** is a side view of Figure 2b showing a cross section of the powder inlet 12 according to AA in Figure 2b (whereas the powder outlet of the powder refilling container is represented according to a side view) and **Figure 2d** is a perspective view of the powder outlet of the powder refilling container in the same upwardly position. The powder outlet 21 of the powder refilling container is a tube 211. The tube 211 comprises a first pair of symmetric pins 2111 and a second pair of symmetric pins 2112 on its external lateral sides (in Figures 2c, 2d only one pin of each pair is apparent). Each pin 2111 of the first pair of symmetric pins presents a bump 2113.
The powder outlet comprises a cover 212 presenting a pair of symmetric guiding grooves 2121 on its external lateral sides (in Figures 2c, 2d only one groove of each pair is apparent) and cooperating with the second pair of pins 2112 of the powder outlet. The bottom edges of the lateral sides of the cover engage with symmetric cover guiding bumps 2114 on the external lateral sides of the powder outlet. These guiding bumps guide the movement of the cover 212 when it is removed from the end of the powder outlet once the powder outlet is moved to the second position inside the powder inlet of the tank. **Figure 2e** is an isolated perspective view of the powder outlet once positioned in the said second position and illustrating the movement of the cover.
As shown in Figure 2c, the receiving area 122 of the powder inlet 12 of the tank comprises a first guiding groove 1221a on its lateral internal wall cooperating with the tube guiding bumps 2113 on the lateral sides of the tube of the powder outlet ; a corresponding symmetric first guiding slot is present on the symmetric lateral internal wall (not represented due to the cross section). The receiving area 122 also comprises a second guiding grooves 1221b on its lateral internal wall cooperating with the second pin 2112 on the lateral side of the tube of the powder outlet ; the corresponding symmetric second guiding slot is present on the symmetric lateral internal wall (not represented due to the cross section).
Both first guiding slots 1221a and second guiding grooves 1221b of the powder inlet in the receiving area present a straight design orientated upwardly in order to guide the introduction of the tube 211 of the powder outlet with the end of the tube orientated upwardly.
Accordingly the cooperation between the tube guiding bumps 2113 and second pair of pins 2112 of the powder outlet with the first guiding grooves 1221a and the second guiding grooves 1221b respectively of the powder inlet enables guiding the introduction of the powder outlet in the receiving area with :
- the powder outlet being oriented upwardly,
- until the powder outlet reaches the first position.
In the first position, the path of powder is closed, firstly, because the end of the tube 211 is closed by the cover 212 and the cover abuts against the end wall 1224 of the receiving area and, secondly, because the outlet in the tube faces the end wall 1224 of the powder inlet and becomes closed by said wall. Accordingly, even if the connector is deprived of cover, in this first position the second end is closed by the wall 1224 and no path for powder exists anyway. Moreover due to the upwardly position of the end of the tube, powder remains in the pouch 2 by gravity.

Once the powder outlet is in the first position, the second pair of pins 2112 of the powder outlet can cooperate with third guiding grooves 1222 present on the symmetric lateral internal wall (one of the pair is not represented due to the cross section). These third guiding grooves present a curved design so that the powder outlet can be rotated in the receiving area. During the rotation, the cover 212 of the powder outlet is retained by the lip 1223 within the receiving area and consequently a path for powder is created. During the removal of the cover, the pair of pins 2112 slide along the guiding grooves 1222 and the bottom guiding edge 2122 of the cover is guided along the cover guiding bump 2114 on the lateral side of the tube 211 as illustrated in Figure 2e. During the rotation the pin 2111 is able to rotate in a corresponding round guiding groove of the receiving area.

Accordingly while moving to the second position, the end of the tube 211 becomes oriented downwardly and the tube aligns itself on the internal tube of the powder inlet 12. Moreover, the cover is removed from the second end of the tube. As a consequence, a flow path is created for powder. Moreover, due to the new orientation of the tube, the operator is incited to move the pouch attached to the connector above the powder inlet so that powder can fill the tank 1 by gravity.
Consequently in this first mode, the system enables the introduction of the powder outlet of the powder refilling container in the powder inlet of the tank according to an upwardly translation up to the first position.

Different tanks 1 can be designed with slightly different design of guiding grooves 1221a, 1221b, 1222 so that only dedicated powder refilling containers 2 with corresponding designed pins 2111, 21112 and bumps 2113 are able to be engaged inside. For example the design can differ by the width, the length, the height, the position and/or the orientation of the grooves in the lateral walls of the receiving area 122. It becomes impossible for the operator to refill a tank dedicated to coffee powder with a powder refilling container containing milk powder for example.

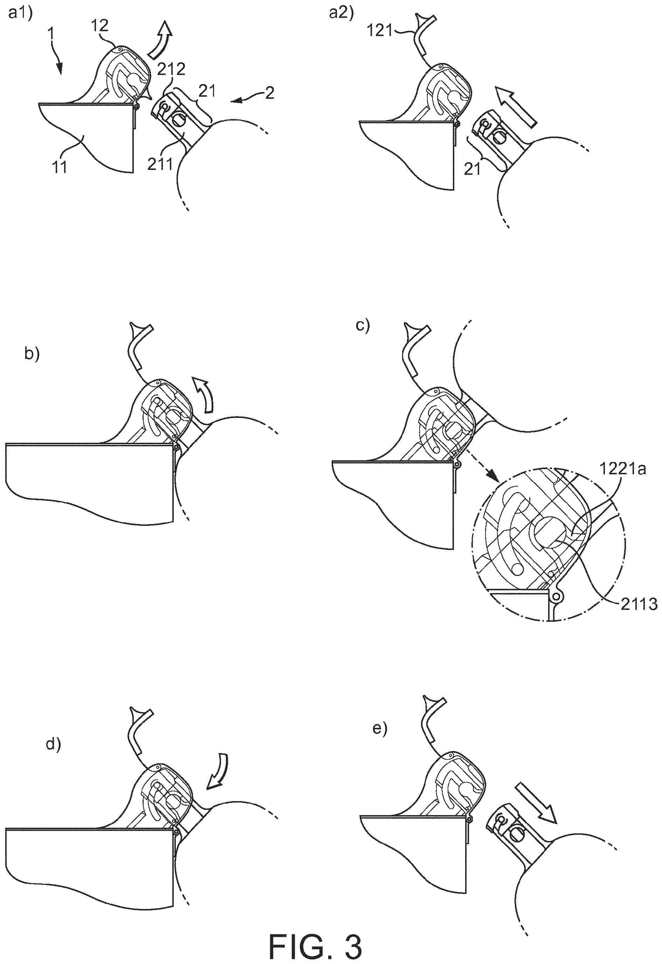

**Figure 3** illustrates the steps of cooperation between the tank and the powder refilling container of the system of the first mode of Figures 2a-2c.
In step a1), the cover 121 of the powder inlet of the tank is opened.
In step a2) the powder refilling container 2 is moved with the powder outlet 21 oriented upwardly and according to an upwardly translation within the powder inlet 21 of the tank until it teaches the first position of step b).
Between step b) and c) the powder refilling container is rotated so as to reach the second position of step c) : here the path for powder is created and refilling happens. As illustrated in the magnified view of step c), the tube guiding bump 2113 is positioned transversely to the guiding groove 1221a of the receiving area meaning that in this second position the operator cannot remove the powder outlet of the powder refilling container from the powder inlet of the storing chamber without rotating back the powder outlet. There is no risk that the operator lets powder flows out of the powder refilling container by mishandling. He/she can even stop holding the powder refilling container during the refilling, no mess is created around the tank since the power outlet remains attached to the powder inlet of the tank.
In step c), the tube o the powder outlet 21 is inclined with respect to vertical according to an angle of about 45°. This angle may vary according to the nature of the powder refilled in the tank, and in particular the flowability property of the powder.
Between step c) and d) the powder refilling container is rotated back so as to reach again the first position of step d) : here the path for powder is closed.
In step e), the powder refilling container powder outlet can be removed from the receiving area, the powder outlet 21 being oriented upwardly.
This system guarantees that no powder can fall from the powder outlet or the powder inlet during the refilling operation.

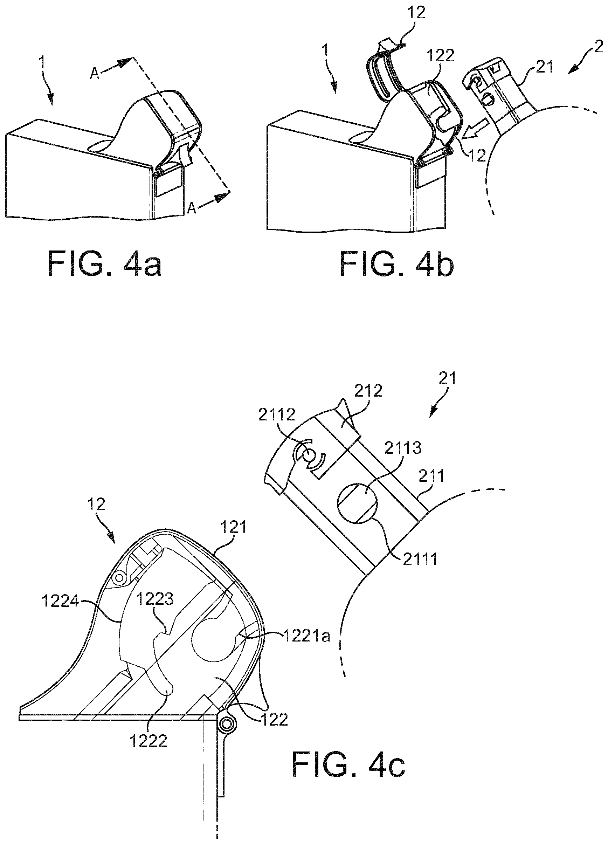

**Figure 4a** illustrates a system of a tank 1 and a powder refilling container 2 according to a second mode of the present invention. The tank 1 comprises a storing chamber 11 and a powder inlet 12. The powder inlet 12 protrudes at the upper part of the storing chamber. The powder inlet 12 comprises a removable cover 121 protecting the powder inlet 12 when the tank is not refilled. The powder refilling container 2 comprises a powder outlet 21.
**Figure 4b** illustrates the system wherein the cover 121 of the powder inlet 12 of the tank has been removed to open the powder inlet. The powder inlet 12 comprises a receiving area 122 configured for receiving the powder outlet 21 of the powder refilling container. The receiving area 122 is designed so as to receive the powder outlet 21, said outlet being oriented upwardly. Figure 4b illustrates how the operator must position the powder refilling container to be able to introduce it inside the receiving area 122 of the powder inlet: as illustrated the powder refilling container must be hold so that the powder outlet of the powder refilling container is oriented upwardly and the powder refilling container is introduced according to a downwardly translation movement.
**Figure 4c** is a side view of Figure 4b showing a cross section of the powder inlet 12 according to AA in Figure 4b (whereas the powder outlet of the powder refilling container is represented according to a side view). The powder outlet 21 of the powder refilling container is a tube 211. The tube 211 comprises a first pair of symmetric pins 2111 and a second pair of symmetric pins 2112 on its external lateral sides (in Figures 4c only one pin of each pair is apparent). Each pin 2111 of the first pair of symmetric pins presents a bump 2113.
The powder outlet comprises a cover 212 presenting a pair of symmetric guiding grooves on its external lateral sides (in Figure 4c only one groove of each pair is apparent), said grooves cooperating with the second pair of pins 2112 of the powder outlet.
The receiving area 122 of the powder inlet 12 of the tank comprises a first guiding slot 1221a on its lateral internal wall cooperating with the tube guiding bumps 2113 on the lateral sides of the tube of the powder outlet ; a corresponding symmetric first guiding slot is present on the symmetric lateral internal wall (not represented due to the cross section). These guiding slots 1221a in the receiving area present a straight design for guiding the translation movement of the operator when he/she introduces the powder outlet of the powder refilling container in the receiving area with the powder outlet orientated upwardly.
Accordingly the cooperation between the tube guiding bumps 2113 with the guiding grooves 1221a of the powder inlet enables guiding the introduction of the powder outlet in the receiving area with :
- the powder outlet being oriented upwardly,
- until the powder outlet reaches the first position.
In the first position, the path of powder is closed, firstly, because the end of the tube 211 is closed by the cover 212 and the cover abuts against the end wall 1224 of the receiving area and, secondly, because the outlet in the tube faces the end wall 1224 of the powder inlet and becomes closed by said wall. Accordingly, even if the connector is deprived of cover, in this first position the second end is closed by the wall 1224 and no path for powder exists anyway. Moreover due to the upwardly position of the end of the tube, powder remains in the pouch 2 by gravity.
Once the powder outlet is in the first position, the second pair of pins 2112 of the powder outlet can cooperate with second guiding grooves 1222 present on the symmetric lateral internal wall of the receiving area (one of the pair is not represented due to the cross section). These second guiding grooves present a curved design so that the powder inlet can be rotated in the receiving area. During the rotation, the bottom edge of the cover 212 of the powder outlet is retained by the lip 1223 within the receiving area and a path for powder is created. During the removal of the cover, the pair of pins 2112 slide along the guiding grooves 1222. During the rotation the pin 2111 is able to rotate in a corresponding round guiding groove of the receiving area.

Accordingly while moving to the second position, the end of the tube 211 becomes oriented downwardly and the tube aligns itself on the internal tube of the powder inlet 12. Moreover, the cover is removed from the second end of the tube. As a consequence, a flow path is created for powder. Moreover, due to the new orientation of the tube, the operator is incited to move the pouch attached to the connector above the powder inlet so that powder can fill the tank 1 by gravity.
Consequently in this second mode, the system enables the introduction of the powder outlet of the powder refilling container in the powder inlet of the tank according to a downwardly translation down to the first position.

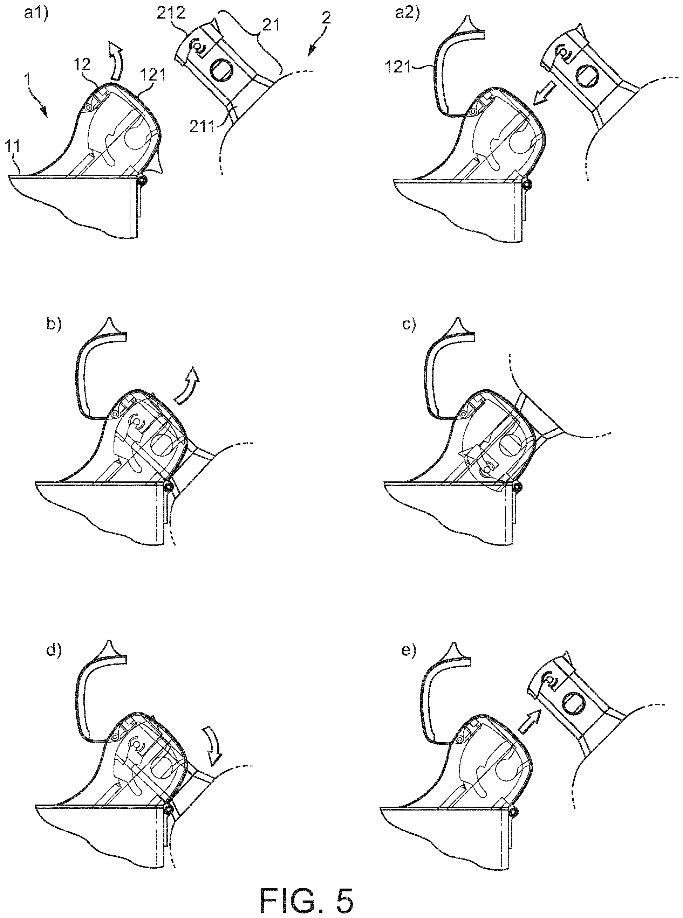

**Figure 5** illustrates the steps of cooperation between the tank and the powder refilling container of the system of the second mode of Figures 4a-4c.
In step a1), the cover 121 of the powder inlet of the tank is opened.

In step a2) the powder refilling container 2 is moved with the powder outlet 21 oriented upwardly and according to a downwardly translation within the receiving area of the powder inlet of the tank until it reaches the first position of step b).
Between step b) and c) the powder refilling container is rotated in a a vertical plane so as to reach the second position of step c) : here the path for powder is created and refilling occurs. Between step c) and d) the powder refilling container is rotated back so as to reach again the first position of step d) : here the path for powder is closed.
In step e), the powder refilling container powder outlet can be removed from the receiving area, the powder outlet 21 being oriented upwardly.
This system guarantees that no powder can fall from the powder outlet or the powder inlet during the refilling operation.

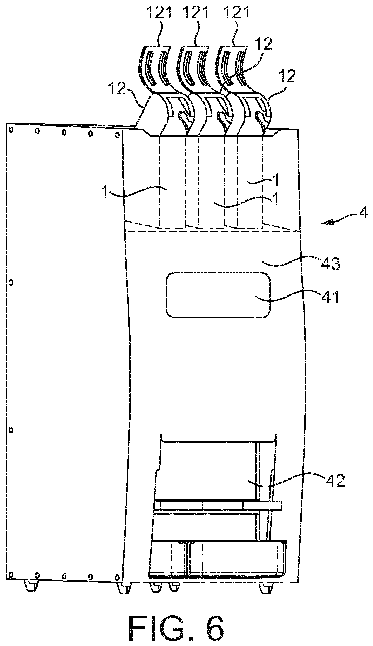

**Figure 6** illustrates a beverage dispenser 4 comprising several beverage powder tanks 1 according to the invention. The tanks are positioned so that the powder inlets 12 are in the front of the dispenser, preferably at the upper part of the dispenser. Accordingly the operator can have direct access to the powder inlets 12 without opening the front door 43 of the dispenser. He/she just has to open the covers 121 of the powder inlets 12. Then the operator does not have to remove the tank form the dispenser for refilling. This operation is usually mandatory in current dispensers because there is a risk that the operator dirties the machine with powder during refilling. But in the present invention there is no such risk.
Behind the front door 13, the dispenser usually comprises beverage preparation units placed under powder tanks 1. The outlets of the tanks are oriented so as to deliver the beverage powder in the beverage preparation for contacting a dose of beverage powder with a diluent. The diluent is supplied by a fluid system comprising usually a boiler, a pump and a heater placed in the back part of the dispenser (not illustrated). The beverage preparation unit 21 delivers the beverage in a cup placed in a dispensing area 42.
The dispenser usually comprises an input device 41 for enabling a customer to select and order a beverage.
The tanks 1 can cooperate with motor shafts at their rear end in order to actuate the dosing devices inside the tanks.

Advantageously it is possible to retrofit existing powder tanks for storing a food or beverage powder of existing dispensers by simply removing the lid and replacing it with a lid comprising a receiving area in order to cooperate with a connector for refilling. Eventually the front door of the dispenser may be adapted too.

The system of the present invention presents the advantage of enabling the movement of the powder outlet of the powder refilling container in the powder inlet of the tank. Yet the system does not comprises any moving part, the system only induces the operator to make the right movement to orientate the powder refilling container in a manner that avoids any spilling of powder.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| tank | 1 |
| storing chamber | 11 |
| powder inlet | 12 |
| cover | 121 |
| receiving area | 122 |
| guiding groove | 1221a, 1221b, 1222 |
| retaining means, lip | 1223 |
| end wall | 1224 |
| powder refilling container | 2 |
| powder outlet | 21 |
| tube | 211 |
| pin | 2111, 2112 |
| tube guiding bump | 2113 |
| cover guiding bump | 2114 |
| cover | 212 |
| guiding groove | 2121 |
| bottom guiding edge | 2122 |
| front edge | 2123 |
| powder | 3 |
| dispenser | 4 |
| input device | 41 |
| dispensing area | 42 |
| front side | 43 |

## Claims

1. System of a tank (1) for storing a food or beverage powder (3) and a powder refilling container (2) for refilling said tank with powder, in which :
- the tank comprises a storing chamber (11) and a powder inlet (12),
- the powder refilling container comprises a powder outlet (21),
the powder outlet of the powder refilling container and the powder inlet of the tank being designed for cooperating together in order to create a connection and a path for powder between the powder outlet of the powder refilling container and the powder inlet of the tank, and
**characterized in that** the connection between the powder outlet of the powder refilling container and the powder inlet of the tank is designed so that, once the powder inlet and the powder outlet are connected, the connection enables the positioning of the powder outlet of the powder refilling container:
- in one first position wherein the powder outlet of the powder refilling container is oriented upwardly,
- in one second position wherein the powder outlet of the powder refilling container is oriented downwardly.

2. System according to Claim 1, wherein the connection between the powder outlet (21) of the powder refilling container and the powder inlet (12) of the tank is designed so that:
- the powder outlet (21) of the powder refilling container is able to be connected to the powder inlet of the tank if said powder outlet is oriented upwardly only,
- once connected to the powder inlet of the tank, the powder outlet (21) of the powder refilling container is able to move relatively to the powder inlet of the tank to be oriented downwardly.

3. System according to any one of the precedent claims wherein the powder outlet (21) of the powder refilling container comprises a removable cover (212) and the connection between the powder outlet of the powder refilling container and the powder inlet of the tank is designed so that:
- in the first position, the cover closes the powder outlet,
- in the second position, the cover is removed from the powder outlet of the powder refilling container.

4. System according to any one of the precedent claims wherein the powder outlet (21) of the powder refilling container is introduced in the powder inlet of the tank according to an upwardly translation up to the first position or according to a downwardly translation down to the first position.

5. System according to any one of the precedent claims wherein the powder outlet (21) of the powder refilling container moves from the first position to the second position according to a rotation.

6. Beverage dispenser (4) comprising at least one tank (1) for storing food or beverage powder, said tank being refillable by powder, wherein the tank comprises a storing chamber (11) and a powder inlet (12) and said powder inlet is designed for cooperating with the powder outlet of a powder refilling container in order to create a connection and a path for powder, said powder outlet of a powder refilling container comprising a tube,
wherein the power inlet (12) of the tank comprises a receiving area (122) for connecting the powder outlet (21) of a powder refilling container for refilling the tank,
**characterized in that** said receiving area is designed :
so that the tube of the powder outlet of the powder refilling container slides in the receiving area of the powder inlet of the tank if the tube is orientated upwardly only, and
so that the tube of the powder refilling container is positioned relatively to the powder inlet of the tank in at least two positions :
- one first position in which the external end of the tube of the powder refilling container is oriented upwardly,
- one second position in which the external end of the tube of the powder refilling container is oriented downwardly.

7. Beverage dispenser according to the precedent claim wherein the receiving area of the powder inlet of the tank presents at least two guiding grooves in its internal lateral sides configured for cooperating with at least one of pins or bumps of the tube during the connection of the powder outlet of the powder refilling container in the receiving area and during the movement between the first and the second positions, and
wherein one part of the guiding grooves (1221b) is straight and designed in order to enable the introduction of the tube in the receiving area with the external end of the tube oriented upwardly and according to a downwardly or upwardly translation, and
wherein another part of the guiding grooves (1222) in the receiving area is curved in order to guide the rotation of the tube in the receiving area.

8. Beverage dispenser according to any one of Claims 6 to 7 wherein said dispenser comprises at least two tanks storing different powders and the powder inlets of the tanks are designed differently for being connected to different powder refilling containers storing different powders.

9. Beverage dispenser according to the Claim 6 or 7, wherein the storing chamber (11) comprises a removable cover (121) for closing the powder inlet.

10. Beverage dispenser according to any of Claims 6 to 9, wherein the tank (1) comprises a powder outlet positioned at the bottom of the storing chamber, powder being dosed from said powder outlet to prepare a beverage.

11. Powder refilling container (2) storing food or beverage powder comprising a powder outlet (21) and said powder outlet being designed for cooperating with the powder inlet (12) of a tank for storing powder of a beverage dispenser in order to create a connection and a path for powder, the power inlet of the tank comprising a receiving area (122) for connecting the powder outlet of the powder refilling container, said receiving area being designed so that the powder outlet of the powder refilling container is able to be positioned relatively to the powder inlet of the tank in at least two positions :
- one first position, in which the powder outlet (21) of the powder refilling container is oriented upwardly,
- one second position in which the powder outlet (21) of the powder refilling container is oriented downwardly,
wherein the powder outlet (21) of the powder refilling container is a tube (211), and **characterized in that** said tube comprises a first pair of symmetric pins (2111) and a second pair of symmetric pins (2112) on its external lateral sides, and
wherein each pin (2111) of the first pair of symmetric pins presents a bump (2113).

12. Powder refilling container according to the precedent claim wherein said container (2) is a pouch.

13. Powder refilling container according to Claim 11 or 12, wherein the powder outlet comprises a removable cover (212) permanently attached to the tube.

14. A range of powder refilling containers according to any one of Claims 11 to 13 wherein said powder refilling containers differ by the nature of the powders they comprise and by the design of the powder outlets (21) so that each powder refilling container powder outlet can be connected to the powder inlet (12) of a dedicated powder tank only.

15. Method for refilling a tank for storing powder with a powder refilling container of a system according to any one of Claims 1 to 5 wherein the following steps are implemented :
- the powder outlet (21) of the powder refilling container is introduced in the powder inlet (12) of the tank to the first position, the powder outlet (21) of the powder refilling container being oriented upwardly, and then
- the powder outlet (21) of the powder refilling container is moved to the second position in which the powder outlet of the powder refilling container is oriented downwardly.

## Patentansprüche

1. System aus einem Tank (1) zum Speichern eines Nahrungsmittel- oder Getränkepulvers (3) und einem Pulvernachfüllbehälter (2) zum Nachfüllen des Tanks mit Pulver, wobei:
- der Tank eine Speicherkammer (11) und einen Pulvereinlass (12) umfasst,
- der Pulvernachfüllbehälter einen Pulverauslass (21) umfasst,
wobei der Pulverauslass des Pulvernachfüllbehälters und der Pulvereinlass des Tanks dafür ausgelegt sind, zusammenzuwirken, um eine Verbindung und einen Pfad für Pulver zwischen dem Pulverauslass des Pulvernachfüllbehälters und dem Pulvereinlass des Tanks herzustellen, und **dadurch gekennzeichnet, dass** die Verbindung zwischen dem Pulverauslass des Pulvernachfüllbehälters und dem Pulvereinlass des Tanks so ausgelegt ist, dass, sobald der Pulvereinlass und der Pulverauslass verbunden sind, die Verbindung das Positionieren des Pulverauslasses des Pulvernachfüllbehälters wie folgt ermöglicht:
- in einer ersten Position, wobei der Pulverauslass des Pulvernachfüllbehälters nach oben gerichtet ist,
- in einer zweiten Position, wobei der Pulverauslass des Pulvernachfüllbehälters nach unten gerichtet ist.

2. System nach Anspruch 1, wobei die Verbindung zwischen dem Pulverauslass (21) des Pulvernachfüllbehälters und dem Pulvereinlass (12) des Tanks so ausgelegt ist, dass:
- der Pulverauslass (21) des Pulvernachfüllbehälters nur mit dem Pulvereinlass des Tanks verbunden werden kann, wenn der Pulverauslass nach oben gerichtet ist,
- der Pulverauslass (21) des Pulvernachfüllbehälters, sobald er mit dem Pulvereinlass des Tanks verbunden ist, sich relativ zu dem Pulvereinlass des Tanks bewegen kann, sodass er nach unten gerichtet ist.

3. System nach einem der vorstehenden Ansprüche, wobei der Pulverauslass (21) des Pulvernachfüllbehälters eine abnehmbare Abdeckung (212) umfasst und die Verbindung zwischen dem Pulverauslass des Pulvernachfüllbehälters und dem Pulvereinlass des Tanks so ausgelegt ist, dass:
- in der ersten Position die Abdeckung den Pulverauslass verschließt,
- in der zweiten Position die Abdeckung von dem Pulverauslass des Pulvernachfüllbehälters entfernt wird.

4. System nach einem der vorstehenden Ansprüche, wobei der Pulverauslass (21) des Pulvernachfüllbehälters gemäß einer Aufwärtsverschiebung nach oben in die erste Position oder gemäß einer Abwärtsverschiebung nach unten in die erste Position in den Pulvereinlass des Tanks eingeführt wird.

5. System nach einem der vorstehenden Ansprüche, wobei der Pulverauslass (21) des Pulvernachfüllbehälters sich aufgrund einer Drehung von der ersten Position in die zweite Position bewegt.

6. Getränkespender (4), umfassend mindestens einen Tank (1) zum Speichern von Nahrungsmittel- oder Getränkepulver, wobei der Tank mit Pulver nachfüllbar ist, wobei der Tank eine Speicherkammer (11) und einen Pulvereinlass (12) umfasst und der Pulvereinlass zum Zusammenwirken mit dem Pulverauslass eines Pulvernachfüllbehälters ausgelegt ist, um eine Verbindung und einen Pfad für Pulver herzustellen, wobei der Pulverauslass eines Pulvernachfüllbehälters ein Rohr umfasst,
wobei der Pulvereinlass (12) des Tanks einen Aufnahmebereich (122) zum Verbinden des Pulverauslasses (21) eines Pulvernachfüllbehälters zum Nachfüllen des Tanks umfasst, **dadurch gekennzeichnet, dass** der Aufnahmebereich so ausgebildet ist:
dass das Rohr des Pulverauslasses des Pulvernachfüllbehälters in den Aufnahmebereich des Pulvereinlasses des Tanks gleitet, nur wenn das Rohr nach oben gerichtet ist, und
dass das Rohr des Pulvernachfüllbehälters relativ zu dem Pulvereinlass des Tanks in mindestens zwei Positionen positioniert ist:
- einer ersten Position, in der das äußere Ende des Rohrs des Pulvernachfüllbehälters nach oben gerichtet ist,
- einer zweiten Position, in der das äußere Ende des Rohrs des Pulvernachfüllbehälters nach unten gerichtet ist.

7. Getränkespender nach dem vorstehenden Anspruch, wobei der Aufnahmebereich des Pulvereinlasses des Tanks mindestens zwei Führungsnuten in seinen inneren Seitenflächen aufweist, die zum Zusammenwirken mit mindestens einem von Zapfen oder Höckern des Rohrs während der Verbindung des Pulverauslasses des Pulvernachfüllbehälters in dem Aufnahmebereich und während der Bewegung zwischen der ersten und der zweiten Position konfiguriert sind, und
wobei ein Teil der Führungsnuten (1221b) gerade ausgebildet und so ausgelegt ist, dass er die Einführung des Rohrs in den Aufnahmebereich mit dem äußeren Ende des Rohrs nach oben gerichtet und gemäß einer Abwärts- oder Aufwärtsverschiebung ermöglicht, und
wobei ein weiterer Teil der Führungsnuten (1222) in dem Aufnahmebereich gekrümmt ist, um die Drehung des Rohrs in dem Aufnahmebereich zu führen.

8. Getränkespender nach einem der Ansprüche 6 bis 7, wobei der Spender mindestens zwei Tanks umfasst, in denen verschiedene Pulver gespeichert sind, und die Pulvereinlässe der Tanks unterschiedlich ausgelegt sind, um mit verschiedenen Pulvernachfüllbehältern verbunden zu werden, in denen verschiedene Pulver gespeichert sind.

9. Getränkespender nach Anspruch 6 oder 7, wobei die Speicherkammer (11) eine abnehmbare Abdeckung (121) zum Verschließen des Pulvereinlasses umfasst.

10. Getränkespender nach einem der Ansprüche 6 bis 9, wobei der Tank (1) einen Pulverauslass umfasst, der am Boden der Speicherkammer positioniert ist, wobei Pulver aus dem Pulverauslass dosiert wird, um ein Getränk zuzubereiten.

11. Pulvernachfüllbehälter (2), in dem Nahrungsmittel- oder Getränkepulver gespeichert wird, umfassend einen Pulverauslass (21), und wobei der Pulverauslass dafür ausgelegt ist, mit dem Pulvereinlass (12) eines Tanks zum Speichern von Pulver eines Getränkespenders zusammenzuwirken, um eine Verbindung und einen Pfad für Pulver herzustellen, wobei der Pulvereinlass des Tanks einen Aufnahmebereich (122) zum Verbinden des Pulverauslasses des Pulvernachfüllbehälters umfasst, wobei der Aufnahmebereich so ausgelegt ist, dass der Pulverauslass des Pulvernachfüllbehälters relativ zu dem Pulvereinlass des Tanks in mindestens zwei Positionen positioniert werden kann:
- einer ersten Position, in der der Pulverauslass (21) des Pulvernachfüllbehälters nach oben gerichtet ist,
- einer zweiten Position, in der der Pulverauslass (21) des Pulvernachfüllbehälters nach unten gerichtet ist,
wobei der Pulverauslass (21) des Pulvernachfüllbehälters ein Rohr (211) ist und **dadurch gekennzeichnet, dass** das Rohr ein erstes Paar symmetrischer Zapfen (2111) und ein zweites Paar symmetrischer Zapfen (2112) auf seinen äußeren Seitenflächen umfasst, und
wobei jeder Zapfen (2111) des ersten Paars symmetrischer Zapfen einen Höcker (2113) aufweist.

12. Pulvernachfüllbehälter nach dem vorstehenden Anspruch, wobei der Behälter (2) ein Beutel ist.

13. Pulvernachfüllbehälter nach Anspruch 11 oder 12, wobei der Pulverauslass eine abnehmbare Abdeckung (212) aufweist, die dauerhaft an dem Rohr befestigt ist.

14. Reihe von Pulvernachfüllbehältern nach einem der Ansprüche 11 bis 13, wobei die Pulvernachfüllbehälter sich durch die Beschaffenheit der Pulver, das sie umfassen, und durch die Konstruktion der Pulverauslässe (21) unterscheiden, sodass jeder Pulverauslass eines Pulvernachfüllbehälters nur mit dem Pulvereinlass (12) eines speziellen Pulvertanks verbunden werden kann.

15. Verfahren zum Nachfüllen eines Tanks zum Speichern von Pulver mit einem Pulvernachfüllbehälter eines Systems nach einem der Ansprüche 1 bis 5, wobei die folgenden Schritte durchgeführt werden:
- der Pulverauslass (21) des Pulvernachfüllbehälters wird bis zu der ersten Position in den Pulvereinlass (12) des Tanks eingeführt, wobei der Pulverauslass (21) des Pulvernachfüllbehälters nach oben gerichtet ist, und anschließend
- wird der Pulverauslass (21) des Pulvernachfüllbehälters in die zweite Position bewegt, in welcher der Pulverauslass des Pulvernachfüllbehälters nach unten gerichtet ist.

## Revendications

1. Système d'un réservoir (1) pour le stockage d'une poudre alimentaire ou de boisson (3) et d'un récipient de rechargement de poudre (2) pour le rechargement dudit réservoir avec de la poudre, dans lequel :
- le réservoir comprend une chambre de stockage (11) et une entrée de poudre (12),
- le récipient de rechargement de poudre comprend une sortie de poudre (21),
la sortie de poudre du récipient de rechargement de poudre et l'entrée de poudre du réservoir étant conçues pour coopérer ensemble afin de créer une liaison et un chemin pour la poudre entre la sortie de poudre du récipient de rechargement de poudre et l'entrée de poudre du réservoir, et **caractérisé en ce que** la liaison entre la sortie de poudre du récipient de rechargement de poudre et l'entrée de poudre du réservoir est conçue de sorte que, une fois que l'entrée de poudre et la sortie sont reliées, la liaison permet le positionnement de la sortie de poudre du récipient de rechargement de poudre :
- dans une première position dans lequel la sortie de poudre du récipient de rechargement de poudre est orientée vers le haut,
- dans une deuxième position dans lequel la sortie de poudre du récipient de rechargement de poudre est orientée vers le bas.

2. Système selon la revendication 1, dans lequel la liaison entre la sortie de poudre (21) du récipient de rechargement de poudre et l'entrée de poudre (12) du réservoir est conçue de sorte que :
- la sortie de poudre (21) du récipient de rechargement de poudre peut être reliée à l'entrée de poudre du réservoir si ladite sortie de poudre est orientée vers le haut uniquement,
- une fois reliée à l'entrée de poudre du réservoir, la sortie de poudre (21) du récipient de rechargement de poudre peut se déplacer relativement à l'entrée de poudre du réservoir pour être orientée vers le bas.

3. Système selon l'une quelconque des revendications précédentes dans lequel la sortie de poudre (21) du récipient de rechargement de poudre comprend un couvercle amovible (212) et la liaison entre la sortie de poudre du récipient de rechargement de poudre et l'entrée de poudre du réservoir est conçue de sorte que :
- dans la première position, le couvercle ferme la sortie de poudre,
- dans la deuxième position, le couvercle est retiré de la sortie de poudre du récipient de rechargement de poudre.

4. Système selon l'une quelconque des revendications précédentes dans lequel la sortie de poudre (21) du récipient de rechargement de poudre est introduite dans l'entrée de poudre du réservoir selon une translation vers le haut jusqu'à la première position ou selon une translation vers le bas jusqu'à la première position.

5. Système selon l'une quelconque des revendications précédentes dans lequel la sortie de poudre (21) du récipient de rechargement de poudre se déplace de la première position à la deuxième position selon une rotation.

6. Distributeur de boissons (4) comprenant au moins un réservoir (1) pour stocker de la poudre alimentaire ou de boisson, ledit réservoir pouvant être rechargé avec de la poudre, dans lequel le réservoir comprend une chambre de stockage (11) et une entrée de poudre (12) et ladite entrée de poudre est conçue pour coopérer avec la sortie de poudre d'un récipient de rechargement de poudre afin de créer une liaison et un chemin pour la poudre, ladite sortie de poudre d'un récipient de rechargement de poudre comprenant un tube,
dans lequel l'entrée d'alimentation (12) du réservoir comprend une zone de réception (122) pour relier la sortie de poudre (21) d'un récipient de rechargement de poudre pour recharger le réservoir,
**caractérisé en ce que** ladite zone de réception est conçue :
de sorte que le tube de la sortie de poudre du récipient de rechargement de poudre glisse dans la zone de réception de l'entrée de poudre du réservoir si le tube est orienté vers le haut uniquement, et
de sorte que le tube du récipient de rechargement de poudre est positionné relativement à l'entrée de poudre du réservoir dans au moins deux positions :
- une première position dans laquelle l'extrémité externe du tube du récipient de rechargement de poudre est orientée vers le haut,
- une deuxième position dans laquelle l'extrémité externe du tube du récipient de rechargement de poudre est orientée vers le bas.

7. Distributeur de boissons selon la revendication précédente dans lequel la zone de réception de l'entrée de poudre du réservoir présente au moins deux rainures de guidage dans ses côtés latéraux internes configurées pour coopérer avec au moins l'une de broches ou de bosses du tube pendant la liaison de la sortie de poudre du récipient de rechargement de poudre dans la zone de réception et pendant le mouvement entre les première et deuxième positions, et
dans lequel une partie des rainures de guidage (1221b) est droite et conçue afin de permettre l'introduction du tube dans la zone de réception avec l'extrémité externe du tube orientée vers le haut et selon une translation vers le bas ou vers le haut, et
dans lequel une autre partie des rainures de guidage (1222) dans la zone de réception est incurvée afin de guider la rotation du tube dans la zone de réception.

8. Distributeur de boissons selon l'une quelconque des revendications 6 à 7 dans lequel ledit distributeur comprend au moins deux réservoirs stockant différentes poudres et les entrées de poudre des réservoirs sont conçues différemment pour être reliées à différents récipients de rechargement de poudre stockant différentes poudres.

9. Distributeur de boissons selon la revendication 6 ou 7, dans lequel la chambre de stockage (11) comprend un couvercle amovible (121) pour fermer l'entrée de poudre.

10. Distributeur de boissons selon l'une quelconque des revendications 6 à 9, dans lequel le réservoir (1) comprend une sortie de poudre positionnée au fond de la chambre de stockage, la poudre étant dosée à partir de ladite sortie de poudre pour préparer une boisson.

11. Récipient de rechargement de poudre (2) stockant de la poudre alimentaire ou de boisson comprenant une sortie de poudre (21) et ladite sortie de poudre étant conçue pour coopérer avec l'entrée de poudre (12) d'un réservoir pour stocker de la poudre d'un distributeur de boissons afin de créer une liaison et un chemin pour la poudre, l'entrée d'alimentation du réservoir comprenant une zone de réception (122) pour relier la sortie de poudre du récipient de rechargement de poudre, ladite zone de réception étant conçue de sorte que la sortie de poudre du récipient de rechargement de poudre peut être positionnée relativement à l'entrée de poudre du réservoir dans au moins deux positions :
- une première position, dans laquelle la sortie de poudre (21) du récipient de rechargement de poudre est orientée vers le haut,
- une deuxième position dans laquelle la sortie de poudre (21) du récipient de rechargement de poudre est orientée vers le bas,
dans lequel la sortie de poudre (21) du récipient de rechargement de poudre est un tube (211), et **caractérisé en ce que** ledit tube comprend une première paire de broches symétriques (2111) et une deuxième paire de broches symétriques (2112) sur ses côtés latéraux externes, et
dans lequel chaque broche (2111) de la première paire de broches symétriques présente une bosse (2113).

12. Récipient de rechargement de poudre selon la revendication précédente dans lequel ledit récipient (2) est une poche.

13. Récipient de rechargement de poudre selon la revendication 11 ou 12, dans lequel la sortie de poudre comprend un couvercle amovible (212) fixé de façon permanente au tube.

14. Gamme de récipients de rechargement de poudre selon l'une quelconque des revendications 11 à 13 dans laquelle lesdits récipients de rechargement de poudre diffèrent par la nature des poudres qu'ils comprennent et par la conception des sorties de poudre (21) de sorte que chaque sortie de poudre de récipient de rechargement de poudre peut être reliée à l'entrée de poudre (12) d'un réservoir de poudre dédié uniquement.

15. Procédé de rechargement d'un réservoir pour stocker de la poudre avec un récipient de rechargement de poudre d'un système selon l'une quelconque des revendications 1 à 5 dans lequel les étapes suivantes sont mises en oeuvre :
- la sortie de poudre (21) du récipient de rechargement de poudre est introduite dans l'entrée de poudre (12) du réservoir jusqu'à la première position, la sortie de poudre (21) du récipient de rechargement de poudre étant orientée vers le haut, et puis
- la sortie de poudre (21) du récipient de rechargement de poudre est déplacée vers la deuxième position dans laquelle la sortie de poudre du récipient de rechargement de poudre est orientée vers le bas.
